# EUROPÄISCHE PATENTSCHRIFT

(11) **EP 1 134 192 B1**
(45) Veröffentlichungstag und Bekanntmachung des Hinweises auf die Patenterteilung: **11.08.2004**
(21) Anmeldenummer: 01106189.2
(22) Anmeldetag: 14.03.2001
(51) Int. Cl.: C02F 1/48

(54) **Verfahren zur Behandlung eines kalkhaltigen Fluids und Fluidbehandlungsvorrichtung**
Process and device to treat a calcareous fluid
Procede et appareil pour traiter un fluide calcaire

(30) Priorität: 15.03.2000 DE 10012583
(43) Veröffentlichungstag der Anmeldung: 19.09.2001
(73) Patentinhaber: Egger, Markus, 87496 Untrasried (DE); Böhm, Berthold, 86399 Bobingen (DE)
(72) Erfinder: Egger, Markus, 87496 Untrasried (DE)
(74) Vertreter: Ernicke, Hans-Dieter, Dipl.-Ing.

(56) Entgegenhaltungen:
- EP-A- 0 333 892
- EP-A- 0 427 241
- WO-A-88/09773
- DE-A- 3 629 288
- US-A- 4 407 719
- US-A- 4 490 252
- US-A- 4 659 479
- US-A- 4 879 045
- US-A- 5 725 778

## Beschreibung

Die Erfindung betrifft ein Verfahren zur Behandlung eines kalkhaltigen Fluids, vorzugsweise in Form von Wasser oder Dampf und eine Fluidbehandlungsvorrichtung mit den Merkmalen im Oberbegriff des Verfahrens- und Vorrichtungshauptanspruchs.

Ein solches Behandlungsverfahren und eine zugehörige Fluidbehandlungsvorrichtung sind aus der US-A-4,659,479 bekannt. Die Fluidbehandlungsvorrichtung dient der Vermeidung von Kalkablagerungen in Rohrleitungssystemen und soll auch vor Algenbefall, Geschmacks- und Geruchsbeeinträchtigungen sowie vor Korrosion schützen. Dies geschieht durch Beaufschlagung des kalkhaltigen Wassers in der durchströmten Fluidbehandlungsvorrichtung mittes eines Magnetfeldes, welches mittels einer elektrischen Magnetspule und einem vom Fluid umströmten ferromagnetischen Verstärkungselementes aufgebaut wird. Das stabförmige Verstärkungselement besteht abwechselnd aus ferromagnetischen und magnetisch isolierenden Abschnitten und ist außenseitig von einer Schraubenwendel umgeben, welche die Fluidströmung in einer Schraubenbewegung zwingt und hierdurch beschleunigt. Am Einlauf und Auslauf herrscht hingegen eine ruhige Fluidströmung. Im Bereich der Schraubenwendel und der Magnetspule wird die Fluidströmung mit einem im wesentlichen gleichmäßigen magnetischen Fluss beaufschlagt.

Eine ähnliche Konstruktion mit vergleichbarer Wirkung zeigt auch die US-A-4,490,252. Hier soll sich die Schraubenwendel in der Art eines Quirls mitdrehen und die beruhigt eintretende Strömung beschleunigen und verwirbeln. Auch hier wird das Fluid mit einem im wesentlichen gleichmäßigen magnetischen Fluss beaufschlagt.

Aus der US-A-4,407,719 ist eine ähnliche Fluidbehandlungsvorrichtung bekannt, bei der das zentrale und vom Fluid umströmte ferromagnetische Verstärkungselement als glattwandige Stange ausgebildet ist. Am Ein- und Auslauf und in dem dazwischen liegenden Bereich der Fluidbehandlungsvorrichtung herrschen im wesentlichen konstante Fluidströmungsverhältnisse und ein konstanter magnetischer Fluss.

Eine besonders einfache Fluidbehandlungsvorrichtung ist aus der US-A-5,725,778 bekannt, bei der Wasserleitung lediglich von einer einfachen elektrischen Magnetspule umgeben ist, welche mit einem besonders gesteuerten Strom beaufschlagt wird. Ein ferromagnetisches Verstärkungselement ist hier nicht vorhanden. Desgleichen sind die fluidischen Strömungsbedingungen und der magnetische Fluss in der Fluidbehandlungsvorrichtung konstant.

Die EP-A-0 427 241 befasst sich mit einer weiteren Variante einer Fluidbehandlungsvorrichtung, bei der am Ein- und Auslauf düsenförmige Verengungen bzw. Erweiterungen des Fluidkanals vorhanden sind. In dem dazwischen liegenden Rohrbereich befinden sich Dauermagnete, die erst in diesem turbulenten Strömungsbereich ein auf das Fluid einwirkendes Magnetfeld erzeugen. Am Ein- und Auslauf wird das Fluid nicht oder nur sehr wenig mit einem Magnetfeld beaufschlagt. Am Einlauf befindet sich zudem noch eine schneckenförmige Fördervorrichtung.

Die DE-A-36 29 288 und die WO 88/09773 zeigen Fluidbehandlungsvorrichtungen mit einem quergestreckten Gehäuse und einer innenliegenden Prallplatte sowie einer außenseitigen Magnetspule, bei denen das Fluid am Ein- und Auslauf nur mit einem sehr schwachen magnetischen Fluss beaufschlagt wird. An den außenliegenden Randbereichen der quer zur Einströmrichtung liegenden Prallplatte wird das Fluid durch Wandverengungen beschleunigt und durch Schwingungen oder eine besondere Formgebung der Prallwand zusätzlich in Turbulenzen versetzt, wobei in diesem Bereich der größte magnetische Fluss auf das Fluid einwirkt.

Die EP-A-0 333 892 zeigt eine andere einfache Variante der Fluidbehandlungsvorrichtung mit einem von einer Magnetspule umgebenen Einlaufrohr, in dem das mit ruhiger Strömung eintretende Fluid durch einen gleichmäßigen magnetischen Fluss beaufschlagt wird. Das Einlaufrohr ist am rückseitigen Ende verschlossen und besitzt in Strömungsrichtung hinter der Magnetspule eine Reihe von Mantelöffnungen, durch die das Fluid unter Erzeugung von Turbulenzen in eine umgebende Kammer austritt und dann zum Auslauf fließt. Ein vom Fluid umströmtes ferromagnetisches Verstärkungselement ist hier nicht vorhanden.

Die US-A-4,879,045 befasst sich mit einer anderen Fluidbehandlungsvorrichtung, bei der Kalkausfällungen durch Zugabe von Eisenionen verhindert werden sollen. Die Fluidbehandlungsvorrichtung ist hierfür als eine sog. Elektronenpumpe ausgebildet, wobei die Eisenionen durch ein Magnetfeld aktiviert werden. Schraubenwendeln beschleunigen auch hier die Fluidströmung.

Ferner sind aus der Praxis andere rein chemisch arbeitende Wasserenthärtungsanlagen bekannt. Sie verlangen die regelmäßige Beigabe bestimmter Chemikalien, die den im Wasser enthaltenen Kalk binden sollen. Dies erhöht die Betriebskosten und beeinträchtigt auch die Wasserqualität.

Weiterhin sind Anlagen bekannt, mit denen elektrische Felder erzeugt werden, die eine hemmende Wirkung auf die Bildung von Kalkablagerungen haben. Das Wasser durchfließt ein durch ein Gerät erzeugtes elektrisches Feld. Dadurch wird die Wandlung der Härtebildner in einer weniger stark haftende Form erreicht.

In der DE-A-198 06 349 wird beispielsweise eine solche Vorrichtung beschrieben, bei der elektrische und magnetische Felder gekoppelt werden. Flüssige Medien werden in Rohren oder rohrähnlichen Behältnissen durch die magnetischen und elektrischen Felder transportiert. Durch den Einfluss der elektrischen und magnetischen Felder verändern sich die Eigenschaften des Mediums, wodurch Ablagerungen verringert werden. Der konstruktive Aufwand für eine solche Anlage ist jedoch sehr hoch.

Alle diese Anlagen haben den Nachteil, dass sie bei der Dampferzeugung nicht wirksam arbeiten. Entkalkungen der Rohrleitungen und Vorrichtungen sind heute noch in regelmäßigen Abständen notwendig

Der Erfindung liegt die Aufgabe zugrunde, ein besseres Behandlungsverfahren und eine verbesserte Fluidbehandlungsvorrichtung anzugeben.

Das beanspruchte Behandlungsverfahren und die Fluidbehandlungsvorrichtung haben den Vorteil, dass bei niedrigen Bau- und Investitionskosten und bei äußerst geringen Betriebskosten ein erheblich höherer Wirkungsgrad als bei bekannten Anlagen erreicht wird. Vor allem ist nun auch ein Einsatz bei Dampf möglich. Dies ist besonders interessant, da bei der Dampferzeugung aufgrund der hohen Temperaturen große Mengen an Kalk ausfallen.

Im weiteren entstehen keine Belastungen für die Umwelt, da es keiner Chemikalien bedarf. Die Fluidbehandlung hat außer der Kalkbehandlung keine unerwünschten Auswirkungen oder Nebenwirkungen auf das Fluid und kostet nur sehr wenig Energie. Die Kosten für die Wartung der Wasserleitungssysteme werden reduziert, da die Wartungsintervalle stark vergrößert werden bzw. weil vollständig auf die Wartung verzichtet werden kann. Zudem kann der Kundendienst durch Computerdiagnose vereinfacht werden.

Das beanspruchte Behandlungsverfahren und die Fluidbehandlungsvorrichtung lösen vorzugsweise im Wege einer Dekristallisation, insbesondere einer Impuls-Dekristallisation, den im Fluid enthaltenen Kalk. Die harten Kalkkristalle zerfallen, wobei andere bedeutsame, zum Beispiel lebenswichtige Mineralien, wie Calcium, Magnesium oder dergleichen, erhalten bleiben und sich weiterhin im Fluid befinden. Zugleich werden das Leitungsnetz und angeschlossene Geräte geschont. Siebe und Brauseköpfe in den Sanitäranlagen bleiben frei. Die Fluidund Kalkbehandlung wirkt so nachhaltig, dass das Calcium nicht wieder kristallisiert. Im weiteren wird auch das Rohrleitungssystem von bereits vorhandener Verkalkung befreit und eine natürliche Schutzschicht gegen Lochfraß und Korrosion aufgebaut. Durch die großvolumigen Behandlungsräume der Fluidbehandlungsvorrichtung kann außerdem der volle Wasserdruck erhalten bleiben. Die Fluidbehandlung ist langlebig und hygienisch und verursacht keine bedenklichen Nebenwirkungen. Insbesondere bleibt die naturbelassene Trinkwasserqualität mit allen Mineralien erhalten.

Die Fluidbehandlungsvorrichtung lässt sich in neue Rohrleitungssysteme durch ihren geringen Platz- und Installationsbedarf auf einfache Weise integrieren, kann aber auch an bestehenden Leitungssystemen nachgerüstet werden. Die eine Bauform der Fluidbehandlungsvorrichtung mit der rohrförmigen und sich längs der Rohrleitungen erstreckenden Behandlungskammer hat den Vorteil eines besonders guten Wirkungsgrades mit Verbindung mit einer optimalen Anpassungsfähigkeit an die jeweiligen Erfordernisse der Kalkbehandlung und des Fluids. Durch die koaxiale Einbindung in die Fluidströmung bleibt der volle Wasserdruck erhalten. Die alternative Bauform hat den Vorteil einer sehr kurzen Baulänge, so dass es sich auch bei ungünstigen Platzverhältnissen in ein Rohrleitungssystem einbauen lässt.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: einen schematischen Längsschnitt einer Fluidbehandlungsvorrichtung,
- Figur 2:: eine abgebrochene und vergrößerte Detaildarstellung des Einlaufbereichs der Fluidbehandlungsvorrichtung von Figur 1,
- Figur 3:: ein Querschnitt durch die Fluidbehandlungsvorrichtung gemäß Schnittlinie III-III von Figur 2,
- Figur 4:: eine Variante zu Figur 3,
- Figur 5:: eine schematische Darstellung der Anordnung von Figur 2 mit einem Stromanschluss,
- Figur 6:: ein Längsschnitt durch eine Variante der Fluidbehandlungsvorrichtung von Figur 1,
- Figur 7:: eine geklappte und abgebrochene Seitenansicht zu Figur 6 und
- Figur 8:: eine Gehäusevariante zu Figur 7.

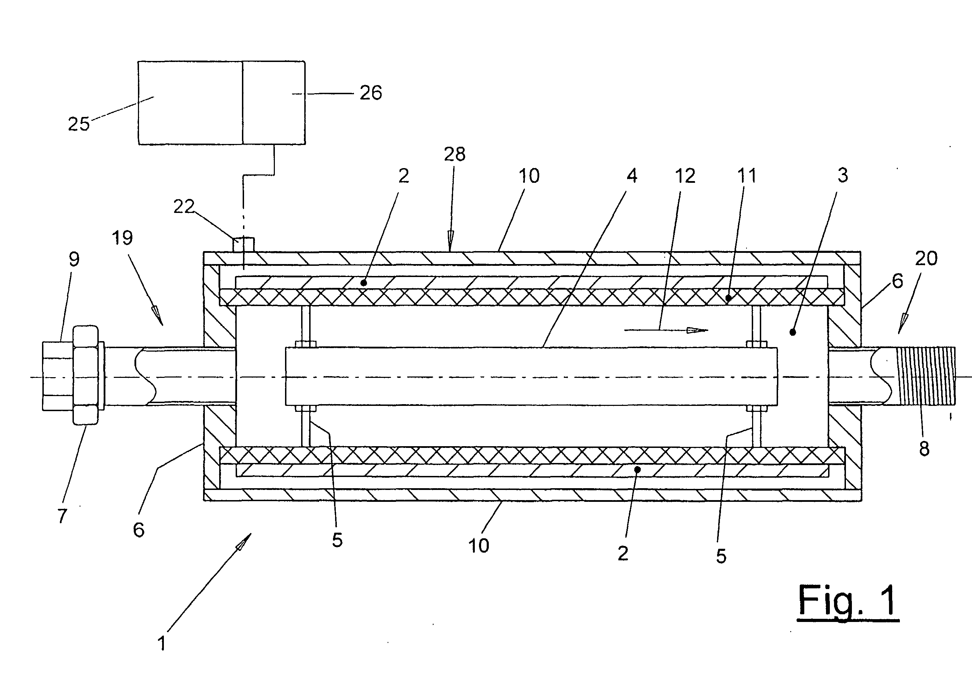

In Figur 1 ist eine Fluidbehandlungsvorrichtung (1) in der Übersicht und schematisch dargestellt. Sie ist zur Behandlung von kalkhaltigen Fluiden (12) vorgesehen, die vorzugsweise aus Wasser oder Dampf bestehen. Mit der Fluidbehandlungsvorrichtung (1) wird der im Fluid (12) enthaltene Kalk umgeformt und einer Dekristallisation, vorzugsweise einer Impuls-Dekristallisation, ausgesetzt. Hierbei wird der Kalk nicht zerstört, sondern gelöst. Die harten Kalkkristalle zerfallen, wobei die anderen nützlichen Mineralien, wie Calcium, Magnesium und dergleichen, im Fluid bleiben. Der Kalk lagert sich an Impfkristallen im Fluid an und bleibt hierdurch als Schwebstoff im Fluid (12). Eine Anlagerung des Kalks an Wänden von Rohren oder Behältern wird vermieden.

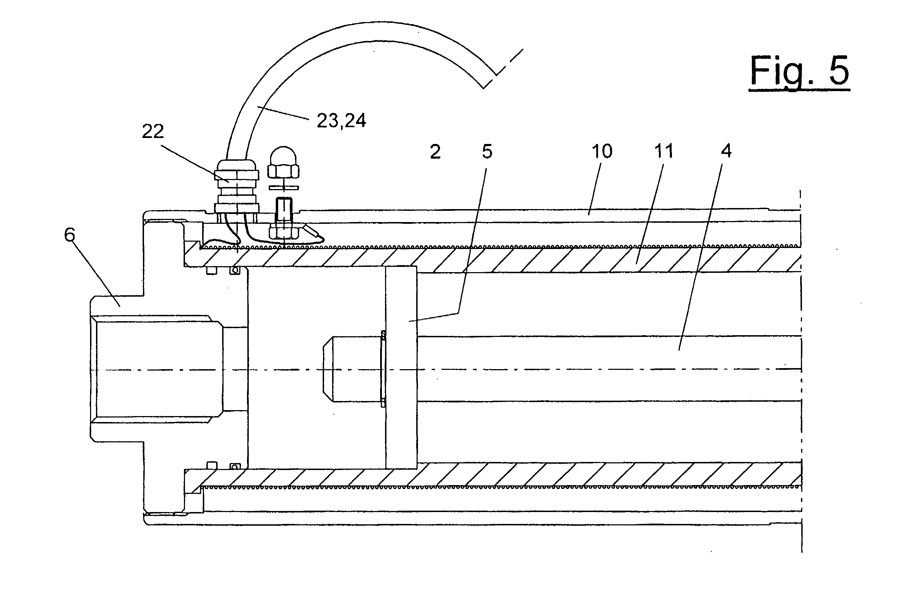

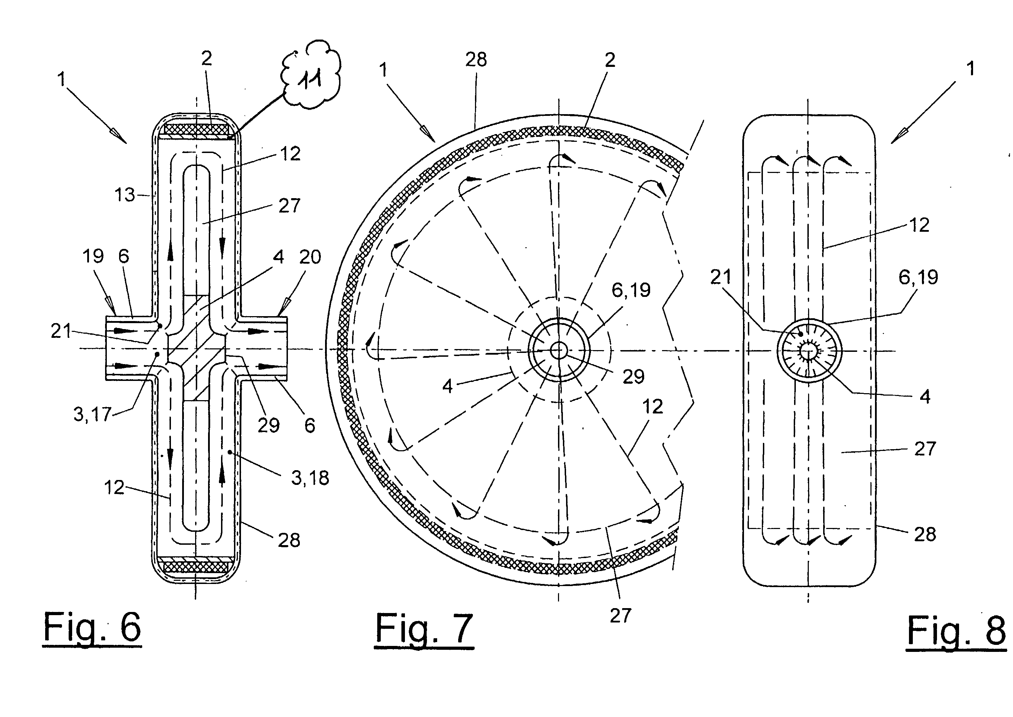

Die Fluidbehandlungsvorrichtung (1) besitzt ein Gehäuse (28) mit einem Einlauf (19) und einem Auslauf (20), mit denen sie über Verbindungsmittel (9) mit einem Fluidleitungssystem (nicht dargestellt) verbunden werden kann. Im Ausführungsbeispiel der Fig. 1 bis 5 ist das Gehäuse (28) rohrförmig und erstreckt sich im wesentlichen längs der ein- und austretenden Fluidströmung (12). In Fig. 6 bis 8 sind Abwandlungen mit anderen Gehäuseformen dargestellt.

Im Gehäuse (28) ist eine rohrförmige Behandlungskammer (3) konzentrisch angeordnet. Diese wird stirnseitig vor zwei ferromagnetischen Gehäuseteilen (6) abgeschlossen, die zum Beispiel als Flansche oder Deckel ausgebildet sind und die den Einlauf (19) und den Auslauf (20) bilden. Die Gehäuseteile (6) bestehen zum Beispiel aus Stahl, insbesondere einem rostfreien Stahl. Sie haben innenseitig eine geeignete Einlass- und Auslassöffnung für das Fluid (12). Außenseitig sind Ansätze mit einer Verschraubung (7) beziehungsweise einem Gewinde (8) zur Verbindung mit dem Fluidleitungssystem angebracht.

Die Behandlungskammer (3) wird umfangsseitig von einer vorzugsweise zylindrischen Wandung (11) umgeben, die zum Beispiel als Trägerrohr ausgebildet ist, welches auf innenseitig vorspringende Ansätze der Gehäuseteile (6) aufgesteckt und unter Einlage von Dichtungen formschlüssig geführt ist. Die Wandung (11) besteht aus einem magnetisch nicht leitenden oder nur schlecht leitenden Material, zum Beispiel einem lebensmittelechten Kunststoff.

Auf dem Trägerrohr (11) ist mindestens ein Magnet (2) angeordnet. In der gezeigten Ausführungsform ist eine Magnetspule (2) mit dicht gewickelten dünnen Kupferdrähten aufgezogen, die über einen Stromanschluss (22) mit einer in Figur 1 schematisch dargestellten Stromversorgung (25) verbunden ist. Die Stromversorgung (25) hat vorzugsweise eine Steuerung (26) zur Steuerung des Spulenstroms.

Das Gehäuse (28) kann ferner eine Schutzhülle oder einen Mantel (10) aufweisen, der das Trägerrohr (11) und die Magnetspule (2) außenseitig mit Abstand umgibt. Die vorzugsweise ebenfalls zylindrische Schutzhülle (10) besteht im gezeigten Ausführungsbeispiel aus einem ferromagnetischen Material, zum Beispiel einem Stahl, insbesondere einem Edelstahl oder rostfreien Stahl. An den Stirnenden der Schutzhülle (10) können die stirnseitigen Gehäuseteile (6) befestigt und zum Beispiel eingeschraubt sein. Alternativ kann die Schutzhülle (10) auch bei geeigneter Abschirmung der Magnetspule (2) entfallen. Sie kann in einer weiteren Abwandlung auch aus einem magnetisch nicht leitenden oder nur schwer leitenden Material, zum Beispiel Kunststoff, bestehen.

In der Behandlungskammer (3) ist konzentrisch und koaxial ein Verstärkungselement (4) oder sogenannter Konzentrator für den Magnetfluss angeordnet. Das Verstärkungselement (4) besteht aus einem geeigneten ferromagnetischen Material, zum Beispiel einem V4A-Stahl. In der Ausführungsform von Fig. 1 bis 5 ist das Verstärkungselement (4) als zylindrischer Stab ausgebildet. Fig. 6 bis 8 zeigen hierzu eine nachfolgend näher erläuterte Variante.

Das Verstärkungselement (4) ist in der Behandlungskammer (3) über ein oder mehrere geeignete Befestigungsmittel (5) radial gehalten und fixiert. Die Befestigungsmittel (5) befinden sich vorzugsweise in Fig. 1 bis 5 am Endbereich des V4A-Stabes (4). Sie können verstellbar sein. Die Befestigungsmittel (5) sind außenseitig am Trägerrohr (11) in geeigneten Ausnehmungen geführt und befestigt.

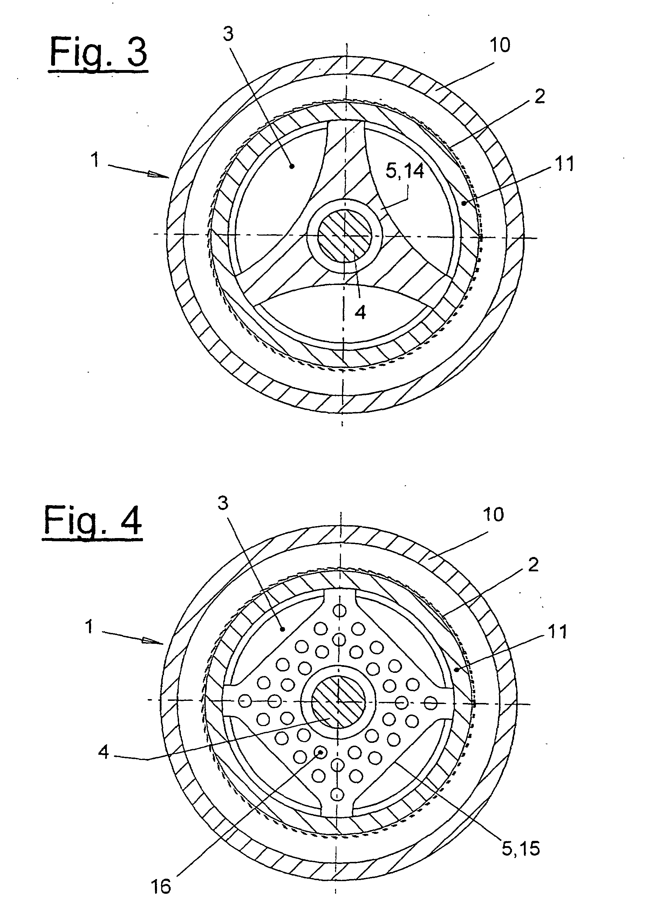

Die Befestigungsmittel (5) können eine beliebige geeignete Querschnittsgestaltung aufweisen, mit der auch die Fluidströmung (12) in der Behandlungskammer (3) beeinflusst werden kann. In der Querschnittsvariante von Figur 3 ist das Befestigungsmittel (5) als dreiarmiger Sternhalter (14) ausgebildet und besteht aus einem geeigneten Kunststoff. Zwischen den Sternarmen und der Wandung (11) verbleibt ein ausreichender Freiraum zum Durchtritt der Fluidströmung (12).

In der Variante von Figur 4 ist das Befestigungsmittel (5) als Prallelement (15), insbesondere als Prallplatte, ausgebildet. Diese hat zum Beispiel im Querschnitt eine im wesentlichen quadratische Grundform mit vier Armen oder Anschlussstücken an den Ecken zur Führung und Befestigung am Trägerrohr (11). Die Prallplatte (15) hat im Innenbereich mehrere kleine Durchlassöffnungen (16) für das Fluid (12). Desgleichen besteht auch zwischen den Plattenrändern und der benachbarten Wandung (11) eine Durchflussöffnung, die allerdings gegenüber der Variante von Figur 3 deutlich verkleinert ist.

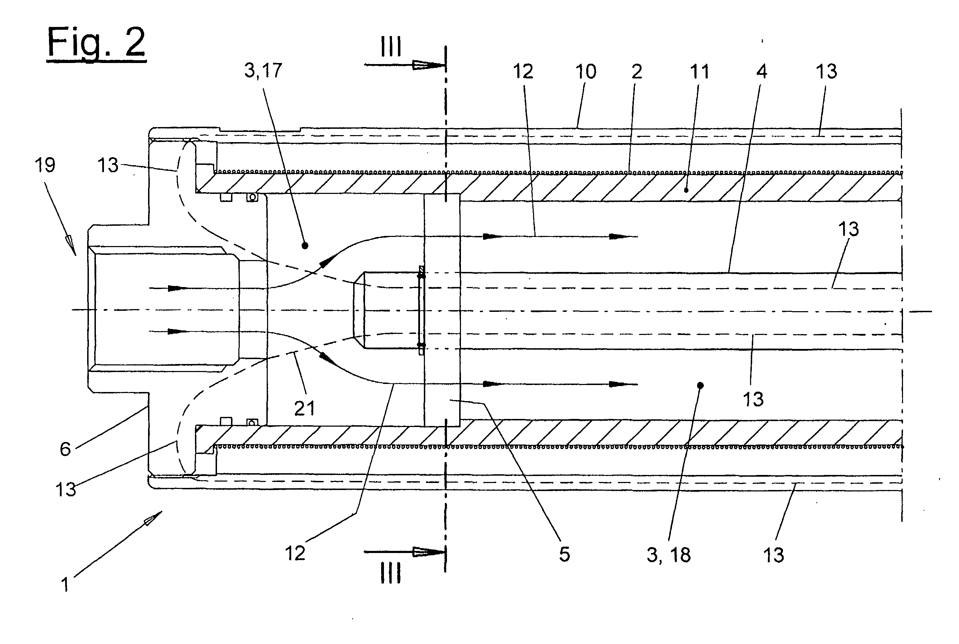

Das axial durch die Behandlungskammer (3) strömende Fluid (12) umfließt das Verstärkungselement (4). In der Behandlungskammer (3) wird zumindest im Einlaufbereich (19) und vorzugsweise auch im Auslaufbereich (20) eine Behandlungszone (17) gebildet. Dazwischen befindet sich eine Beruhigungszone (18), die sich in etwa zwischen den zwei Befestigungsmitteln (5) von Fig. 1 bis 5 erstreckt. In der oder den Behandlungszone(n) (17) wird das Fluid (12) einem konzentrierten Magnetfeld beziehungsweise einem verstärkten magnetischen Fluss (21) unterworfen. In der Beruhigungszone (18) ist die Magnetfeldbeeinflussung des Fluids (12) durch die magnetisch nicht leitende Wandung (11) wesentlich geringer. Figur 2 zeigt schematisch den Magnetfluss, der vor allem über die Hülle (11), die Gehäuseteile (6) und das Verstärkungselement (4) fließt anhand der gestrichelt dargestellten Feldlinien (13).

Wie Figur 2 verdeutlicht, ist das Verstärkungselement (4) konzentrisch zur Durchflussöffnung am Einlauf (19) und Auslauf (20) angeordnet und dabei axial ein Stück distanziert. Der Abstand ist so groß gewählt, dass sich zwischen der angephasten Stirnseite des Verstärkungselementes (4) und dem benachbarten ferromagnetischen Gehäuseteil (6) der konzentrierte magnetische Fluss (21) in der Art eines trichterförmigen magnetischen Flussvorhangs bildet. Der Abstand bewegt sich in der Praxis zwischen ca. 1 bis 10 cm. Die aus der Einlassöffnung austretende Fluidströmung (12) wird zur Stirnseite des Verstärkungselementes (4) umgelenkt und tritt hierbei durch den Flussvorhang (21), um anschließend im Rohrbereich zwischen der Wandung (11) und dem Verstärkungselement (4) weiter zu fließen. In dieser stirnseitigen Behandlungszone (17) kann auch eine Beschleunigung der Fluidströmung (12) erfolgen. In der nachfolgenden Beruhigungszone (18) fließt die Fluidströmung (12) wieder ruhiger und langsamer. Ähnliche Verhältnisse können auch in der Behandlungszone (17) und am Auslauf (20) vorhanden sein.

Das von der Magnetspule (2) erzeugte Magnetfeld ist vorzugsweise ein Wechselfeld. Das Wechselfeld kann zudem auch für eine Impuls-Dekristallisation in geeigneter Weise pulsieren. Die Stromversorgung (25) liefert einen Wechselstrom mit vorzugsweise einer Kleinspannung von bis zu 45 Volt. Die Frequenz des Wechselstroms und des Wechselfelds liegt vorzugsweise unter 650 Hz. Ein bevorzugter Frequenzbereich liegt bei 30 bis 50 Hz. Über die Steuerung (26) können Spannung und Frequenz des Spulenstroms und damit der magnetische Fluss gesteuert und verändert werden. Hierdurch kann der Magnetfluss und insbesondere der Flussvorhang (21) an die jeweiligen Erfordernisse des Fluids (12) angepasst werden. Hierbei kann veränderten Bedingungen, wie zum Beispiel Art des Fluids, Kalkgehalt, Flussmenge, Druck, Strömungsgeschwindigkeit etc., Rechnung getragen werden.

Durch das konzentrierte Magnetfeld (21) zerfallen die harten Kalkkristalle und werden ionisiert. Das Fluid (12) enthält in aller Regel sogenannte Impfkristalle, zum Beispiel kleine Verunreinigungen oder andere Schwebstoffe im Fluid (12), an die sich die Kalkionen anlagern und somit als Schwebstoffe im Fluid (12) bleiben. Für diese Anlagerung ist die Beruhigungszone (18) vorteilhaft und geeignet. Das Prallelement (15) hat hierbei den vorteilhaften Effekt, dass an den verkleinerten Durchflussöffnungen die Impfkristalle mechanisch zerschlagen werden, was ihre Reaktionsfähigkeit und die Anlagerung der Kalkionen verbessert.

Am Auslauf (20) und dem dortigen Flussvorhang (21) kann eine zweite massive Ionisierung der Kalkkristalle und eine weitere Dekristallisation nebst neuerlicher Anlagerung der Kalkionen an die Impfkristalle stattfinden. Hierbei ist es günstig, wenn im Fluidleitungsbereich hinter dem Auslauf (20) ebenfalls eine beruhigte Strömung und quasi eine weitere Beruhigungszone vorhanden ist. Wegen der kalkhaltigen Schwebstoffe im Fluid (12) sollte im Fluidleitungssystem hinter der Fluidbehandlungsanlage (1) kein mechanischer Filter vorhanden sein. Für die Fluidbehandlung ist es auch günstig, wenn im Fluidleitungssystem vor dem Einlauf (19) eine ruhige Fluidströmung (12) herrscht.

In Abwandlung der gezeigten Ausführungsform ist es möglich, anstelle der magnetischen Wechselfelder magnetische Gleichfelder einzusetzen. In weiterer Abwandlung ist auch eine Kombination von Wechsel- und Gleichfeldern möglich. Günstig ist es außerdem, wenn die magnetischen Wechselfelder zeitlich ändernde Frequenzen aufweisen und insbesondere ein regelmäßiges oder unregelmäßiges Impuls-Verhalten haben. Zudem ist es möglich, statt einer Magnetspule zwei oder mehrere Magnetspulen zu verwenden. In weiterer Abwandlung können statt Magnetspulen auch Permanentmagnete eingesetzt werden. Sie sind besonders kostengünstig, bieten auf der anderen Seite aber geringere Beeinflussungsmöglichkeiten für die Magnetfelder und den Magnetfluss.

In Fig. 6 bis 8 ist eine Variante in der Bauform der Fluidbehandlungsvorrichtung (1) dargestellt. In diesem Ausführungsbeispiel erstreckt sich das Gehäuse (28) quer zu den angeschlossenen Fluidleitungsrohren und der zu- und abgeführten Fluidströmung (12). Die am Einlauf (6) eintretende Fluidströmung (12) wird in die querliegende Behandlungskammer (3) um 90° umgelenkt und fließt dort entlang des Verstärkungselementes (4) und eines weiteren Führungselementes (27), wobei an dessen Ende eine weitere Strömungsumlenkung um 180° erfolgt. Am Auslauf (20) wird die Fluidströmung (12) wiederum um 90° umgelenkt. Das Gehäuse (28) hat in der Ausführungsform von Fig. 6 eine im wesentlichen zylindrische Topfform mit einer dementsprechenden im wesentlichen zylindrischen Scheibenform des Verstärkungselementes (4) und des umgebenden Führungselementes (12). In der Variante von Figur 8 ist das Gehäuse (28) schmäler und langgestreckt mit einer entsprechenden Formgebung von Verstärkungselement (4) und Führungsteil (27), welches sich hier seitlich bis zu den Gehäusewänden erstreckt und die Fluidströmung (12) nur nach oben oder unten leitet.

Das Verstärkungselement (4) hat in beiden Ausführungsformen im Querschnitt eine Art Kreuzform und besitzt in der Mitte beidseitig höckerartige Ansätze, die zu den Gehäuseteilen (6) vorspringen und über die wie im ersten Ausführungsbeispiel der Flussvorhang (21) läuft. Bei dieser Ausführungsform ist das Gehäuse (28) metallisch oder besteht aus einem anderen magnetisch leitenden Material. Zur Bildung der Ruhezone (18) ist hierbei das Führungselement (27) aus einem magnetisch nicht leitenden oder nur schlecht leitenden Material gefertigt, so dass die Feldlinien (13) sich vor allem in den Gehäusewänden und über den in der Behandlungszone (17) an der Strömungsumlenkung befindlichen konzentrierten Flussvorhang (21) erstreckt. Die Magnetspule (2) oder ein Permanentmagnet ist hier in Ringform ausgebildet und am äußeren Rand des Gehäuses (28) und der Behandlungskammer (3) in einem abgedichteten Aufnahmeraum oder außerhalb des Gehäuses (28) mit einer entsprechenden Ummantelung oder Abschirmung angeordnet. Zwischen den zum Einlauf (19) und Auslauf (20) vorspringenden Höckern (29), und der benachbarten Ecke der Gehäusewand kann eine Verengung des Strömungsquerschnitts und eine entsprechende Strömungsbeschleunigung bestehen. Die Höcker (29) lenken die Ein- und Auslauffluidströmung (12) um und können entsprechend strömungsgünstig gestaltet sein, wobei sich zur Flusskonzentration eine abgeplattete Oberfläche mit einer relativ starken Randkrümmung empfiehlt.

Das Verstärkungselement (4) ist mit dem umgebenden ringförmigen Führungselement (27) fest verbunden und wird in der Behandlungskammer (3) beziehungsweise im Gehäuse (28) über entsprechend geeignete Befestigungsmittel (hier nicht dargestellt) gehalten. Diese können dabei ebenfalls als Prallelement ausgebildet sein. Ansonsten ist die Fluidbehandlungsvorrichtung (1) von Fig. 6 bis 8 gleich oder ähnlich wie diejenige im ersten Ausführungsbeispiel ausgebildet.

Abwandlungen der gezeigten und beschriebenden Ausführungsformen sind in verschiedener Weise möglich, wobei die Merkmale der verschiedenen Varianten auch miteinander kombiniert und/oder vertauscht werden können.

### BEZUGSZEICHENLISTE

- 1: Fluidbehandlungsvorrichtung
- 2: Magnet, Magnetspule
- 3: Behandlungskammer
- 4: Verstärkungselement
- 5: Befestigungsmittel
- 6: Gehäuseteil, Flansch, Stirndeckel
- 7: Verschraubung
- 8: Gewinde
- 9: Verbindungsmittel
- 10: Schutzhülle, Mantel
- 11: Wandung, Trägerrohr
- 12: Fluid, Fluidströmung
- 13: Magnetfluss, Feldlinien
- 14: Sternhalter
- 15: Prallelement, Prallplatte
- 16: Durchlassöffnung
- 17: Behandlungszone
- 18: Beruhigungszone
- 19: Einlauf
- 20: Auslauf
- 21: verstärkter magnetischer Fluss, Flussvorhang
- 22: Stromanschluss
- 23: Kabel, Spulenanschluss
- 24: Kabel, Nullleiter
- 25: Stromversorgung
- 26: Steuerung
- 27: Führungselement
- 28: Gehäuse
- 29: Höcker

## Patentansprüche

1. Verfahren zur Behandlung eines kalkhaltigen Fluids (12) in Form von Wasser oder Dampf mit einer vom Fluid (12) durchströmten Fluidbehandlungsvorrichtung (1) mit einem Gehäuse (20), einer Behandlungskammer (3), einem Einlauf (19) und einem Auslauf (20) für das Fluid (12), wobei in der Fluidbehandlungsvorrichtung (1) mit mindestens einer Wandung (11), die aus einem magnetisch nicht oder schlecht leitenden Material besteht und die umfangseitig die Behandlungskammer (3) umgibt, mit mindestens einem auf der Wandung außenseitig angeordneten Magnet (2) und einem vom Fluid (12) in der Behandlungskammer (3) umströmten ferromagnetischen Verstärkungselement (4) ein Magnetfeld aufgebaut wird, **dadurch gekennzeichnet, dass** das Fluid (12) am Einlauf (19) in einer Behandlungszone (17) mit einem konzentrierten magnetischen Flussbereich (21) beaufschlagt wird, der zwischen einem die Behandlungskammer (3) stirnseitig abschließenden und mit einer Durchflussöffnung für das Fluid (12) versehenen ferromagnetischen und vom Magnetfluss beaufschlagten Gehäuseteil (6) und der Stirnseite des zur Durchflussöffnung konzentrisch und axial mit einem den Magnetfluss konzentrierenden Abstand angeordneten Verstärkungselements (4) gebildet wird, wobei das Fluid (12) in mindestens einer anschließenden Beruhigungszone (18) mit einem wesentlich geringeren magnetischen Fluss beaufschlagt wird.

2. Verfahren nach Anspruch 1, **dadurch gekennzeichnet, dass** das durch die Durchflussöffnung eintretende Fluid (12) zur Stirnseite des Verstärkungselements (4) umgelenkt wird und dabei durch den konzentrierten magnetischen Flussbereich (21) tritt.

3. Verfahren nach Anspruch 1 oder 2, **dadurch gekennzeichnet, dass** das Fluid (12) in der stirnseitigen Behandlungszone (17) beschleunigt wird.

4. Verfahren nach Anspruch 1, 2 oder 3, **dadurch gekennzeichnet, dass** das Fluid (12) in der Beruhigungszone (18) langsamer fließt.

5. Verfahren nach einem der vorhergehenden Ansprüche, **dadurch gekennzeichnet, dass** das Fluid (12) am Auslauf (20) in einer weiteren Behandlungszone (17) mit einem konzentrierten magnetischen Flussbereich (21) beaufschlagt wird.

6. Verfahren nach einem der vorhergehenden Ansprüche, **dadurch gekennzeichnet, dass** der magnetische Fluss durch mindestens eine Magnetspule (2) erzeugt und auf auf die Art, die Durchflussmenge und die Strömungsbedingungen des Fluids (12) eingestellt wird.

7. Verfahren nach einem der vorhergehenden Ansprüche, **dadurch gekennzeichnet, dass** die Magnetspule (2) mit Wechselstrom unter einer Kleinspannung bis ca. 45 Volt und einer Frequenz unter ca. 650 Hz, vorzugsweise zwischen 30 bis 50 Hz, beaufschlagt wird.

8. verfahren nach einem der vorhergehenden Ansprüche, **dadurch gekennzeichnet, dass** das Fluid (12) zumindest am Einlauf (19) durch ein Prallelement (15) geleitet wird.

9. Fluidbehandlungsvorrichtung für kalkhaltige Fluide (12) mit einem Gehäuse (28), einem Einlauf (19) und einem Auslauf (20) für das Fluid (12), wobei die Fluidbehandlungsvorrichtung (1) eine vom Fluid (12) durchströmte Behandlungskammer (3) mit einem innenliegenden umströmten ferromagnetischen Verstärkungselement (4) und mit mindestens einer Wandung (11) aufweist, die aus einem magnetisch nicht oder schlecht leitenden Material besteht und die umfangseitig die Behandlungskammer (3) umgibt, wobei auf der Wandung außenseitig ein oder mehrere Magnete (2) angeordnet sind, **dadurch gekennzeichnet, dass** die Behandlungskammer (3) am Einlauf (19) eine Behandlungszone (17) mit einem konzentrierten magnetischen Flussbereich (21) für das Fluid (12) und mindestens eine anschließende Beruhigungszone (18) mit einem wesentlich geringeren magnetischen Fluss aufweist, wobei die Behandlungskammer (3) stirnseitig von einem ferromagnetischen und vom Magnetfluss beaufschlagten Gehäuseteil (6) abgeschlossen ist, welches mit einer Durchflussöffnung für das Fluid (12) versehen ist, wobei das Verstärkungselement (4) zur Durchflussöffnung konzentrisch und axial mit einem den Magnetfluss konzentrierenden Abstand angeordnet ist.

10. Fluidbehandlungsvorrichtung nach Anspruch 9, **dadurch gekennzeichnet, dass** in der Behandlungskammer (3) am Auslauf (20) eine weitere Behandlungszone (17) mit einem vom Fluid (12) durchströmten konzentrierten magnetischen Flussbereich (21) angeordnet ist.

11. Fluidbehandlungsvorrichtung nach Anspruch 9 oder 10, **dadurch gekennzeichnet, dass** die Behandlungskammer (3) in der Beruhigungszone (18) eine magnetisch nicht leitende Wandung (11) aufweist oder das Verstärkungselement (4) in der Beruhigungszone (18) ein Führungselement (27) aus einem magnetisch nicht leitenden oder nur schlecht leitenden Material aufweist.

12. Fluidbehandlungsvorrichtung nach einem der Ansprüche 9 bis 11, **dadurch gekennzeichnet, dass** das Gehäuse (28) und die innenliegende Behandlungskammer (3) eine gestreckte im wesentlichen zylindrische Form aufweisen.

13. Fluidbehandlungsvorrichtung nach einem der Ansprüche 9 bis 12, **dadurch gekennzeichnet, dass** das Verstärkungselement (4) eine Stabform aufweist und zentrisch sowie koaxial in der Behandlungskammer (3) angeordnet ist.

14. Fluidbehandlungsvorrichtung nach einem der Ansprüche 9 bis 13, **dadurch gekennzeichnet, dass** das Verstärkungselement (4) in der Behandlungskammer (3) durch radiale Befestigungsmittel (5) gehalten ist.

15. Fluidbehandlungsvorrichtung nach einem der Ansprüche 9 bis 14, **dadurch gekennzeichnet, dass** zumindest ein Befestigungsmittel (5) als Prallplatte (15) mit Durchlassöffnungen (16) ausgebildet ist.

16. Fluidbehandlungsvorrichtung nach einem der Ansprüche 9 bis 15, **dadurch gekennzeichnet, dass** die Fluidbehandlungsvorrichtung (1) mindestens eine Magnetspule (2) und eine steuerbare (26) Stromversorgung (25) aufweist.

17. Fluidbehandlungsvorrichtung nach einem der Ansprüche 9 bis 16, **dadurch gekennzeichnet, dass** die Magnetspule (2) koaxial zur Behandlungskammer (3) und außen auf der magnetisch nicht leitenden Wandung (11) angeordnet ist.

18. Fluidbehandlungsvorrichtung nach einem der Ansprüche 9 bis 17, **dadurch gekennzeichnet, dass** die Stromversorgung (25) einen steuerbaren Wechselstrom unter einer Kleinspannung bis ca. 45 Volt und einer Frequenz unter ca. 650 Hz, vorzugsweise zwischen 30 bis 50 Hz, liefert.

19. Fluidbehandlungsvorrichtung nach einem der Ansprüche 9 bis 18, **dadurch gekennzeichnet, dass** die magnetischen Wechselfelder zeitlich ändernde Frequenzen aufweisen.

20. Fluidbehandlungsvorrichtung nach einem der Ansprüche 9 bis 19, **dadurch gekennzeichnet, dass** sowohl Wechselfelder als auch Gleichfelder vorgesehen sind, die in beliebiger Reihenfolge hintereinander angeordnet sind.

## Claims

1. Process for treating a calcareous fluid (12) in the form of water or steam with a fluid treatment device (1) through which the fluid (12) flows, with a housing (20), a treatment chamber (3), an inlet (19) and an outlet (20) for the fluid (12), wherein a magnetic field is built up in the fluid treatment device (1) with at least one wall (11), which consists of a material which does not magnetically conduct or magnetically conducts poorly and which circumferentially surrounds the treatment chamber (3), with at least one magnet (2) arranged on the outside of the wall and with a ferromagnetic intensifying element (4) around which the fluid (12) in the treatment chamber (3) flows, **characterized in that**, at the inlet (19), the fluid (12) is exposed in a treatment zone (17) to a region of concentrated magnetic flux (21), which is formed between a ferromagnetic housing part (6), which closes off the treatment chamber (3) at the extreme end, is provided with a through-flow opening for the fluid (12) and is exposed to the magnetic flux, and the extreme end of the intensifying element (4), which is arranged concentrically with respect to the through-flow opening and axially at a distance concentrating the magnetic flux, the fluid (12) being exposed to a much less intense magnetic flux in at least one subsequent stabilizing zone (18).

2. Process according to Claim 1, **characterized in that** the fluid (12) entering through the through-flow opening is deflected to the extreme end of the intensifying element (4) and thereby passes through the region of concentrated magnetic flux (21).

3. Process according to Claim 1 or 2, **characterized in that** the fluid (12) is accelerated in the treatment zone (17) at the extreme end.

4. Process according to Claim 1, 2 or 3, **characterized in that** the fluid (12) flows more slowly in the stabilizing zone (18).

5. Process according to one of the preceding claims, **characterized in that**, at the outlet (20), the fluid (12) is exposed to a region of concentrated magnetic flux (21) in a further treatment zone (17).

6. Process according to one of the preceding claims, **characterized in that** the magnetic flux is produced by at least one magnetic coil (2) and is set to the type, the through-flow rate and the flow conditions of the fluid (12).

7. Process according to one of the preceding claims, **characterized in that** the magnetic coil (2) is subjected to alternating current at a low voltage of up to about 45 volts and a frequency at about 650 Hz, preferably between 30 and 50 Hz.

8. Process according to one of the preceding claims, **characterized in that**, at least at the inlet (19), the fluid (12) is directed by a baffle element (15).

9. Fluid treatment device for calcareous fluids (12) with a housing (28), an inlet (19) and an outlet (20) for the fluid (12), the fluid treatment device (1) having a treatment chamber (3) through which the fluid (12) flows, with an interior, flowed-around ferromagnetic intensifying element (4) and with at least one wall (11), which consists of a material which does not magnetically conduct or magnetically conducts poorly and which circumferentially surrounds the treatment chamber (3), one or more magnets (2) being arranged on the outside of the wall, **characterized in that** the treatment chamber (3) has at the inlet (19) a treatment zone (17) with a region of concentrated magnetic flux (21) for the fluid (12) and at least one subsequent stabilizing zone (18) with a much less intensive magnetic flux, the treatment chamber (3) being closed off at the extreme end by a ferromagnetic housing part (6), which is exposed to the magnetic flux and is provided with a through-flow opening for the fluid (12), the intensifying element (4) being arranged concentrically with respect to the through-flow opening and axially at a distance concentrating the magnetic flux.

10. Fluid treatment device according to Claim 9, **characterized in that** in the treatment chamber (3) there is arranged at the outlet (20) a further treatment zone (17) with a region of concentrated magnetic flux (21), through which the fluid (12) flows.

11. Fluid treatment device according to Claim 9 or 10, **characterized in that** the treatment chamber (3) has in the stabilizing zone (18) a magnetically nonconducting wall (11) or the intensifying element (4) has in the stabilizing zone (18) a guiding element (27) made of a material which does not magnetically conduct or magnetically conducts only poorly.

12. Fluid treatment device according to one of Claims 9 to 11, **characterized in that** the housing (28) and the interior treatment chamber (3) has an elongated, substantially cylindrical form.

13. Fluid treatment device according to one of Claims 9 to 12, **characterized in that** the intensifying element (4) has the form of a bar and is arranged centrally and coaxially in the treatment chamber (3).

14. Fluid treatment device according to one of Claims 9 to 13, **characterized in that** the intensifying element (4) is held in the treatment chamber (3) by radial fastening means (5).

15. Fluid treatment device according to one of Claims 9 to 14, **characterized in that** at least one fastening means (5) is formed as a baffle plate (15) with through-flow openings (16).

16. Fluid treatment device according to one of Claims 9 to 15, **characterized in that** the fluid treatment device (1) has at least one magnetic coil (2) and a controllable (26) power supply (25).

17. Fluid treatment device according to one of Claims 9 to 16, **characterized in that** the magnetic coil (2) is arranged coaxially with respect to the treatment chamber (3) and on the outside of the magnetically nonconducting wall (11).

18. Fluid treatment device according to one of Claims 9 to 17, **characterized in that** the power supply (25) delivers a controllable alternating current at a low voltage of up to about 45 volts and a frequency at about 650 Hz, preferably between 30 and 50 Hz.

19. Fluid treatment device according to one of Claims 9 to 18, **characterized in that** the magnetic alternating fields have frequencies which change over time.

20. Fluid treatment device according to one of Claims 9 to 19, **characterized in that** both alternating fields and constant fields are provided, arranged one behind the other in any desired sequence.

## Revendications

1. Procédé de traitement d'un fluide (12) calcaire sous forme d'eau ou de vapeur par un dispositif (1) de traitement de fluide parcouru par le fluide (12) et comprenant un boîtier (20), une chambre (3) de traitement, une entrée (19) et une sortie (20) pour le fluide (12), dans lequel on établit, un champ magnétique dans le dispositif (1) de traitement de fluide ayant au moins une paroi (11) qui est en un matériau ne conduisant pas magnétiquement ou conduisant mal magnétiquement et qui entoure de tous côtés la chambre (3) de traitement ayant au moins un aimant (2) disposé du côté extérieur sur la paroi et un élément (4) ferromagnétique de renfort autour duquel passe le fluide (12) dans la chambre (3) de traitement, **caractérisé en ce que** l'on envoie le fluide (12) à l'entrée (19) dans une zone (17) de traitement ayant un domaine (21) de flux magnétique très concentré qui est formé entre une partie (6) de boîtier ferromagnétique, exposée au flux magnétique, fermant du côté frontal la chambre (3) de traitement et munie d'une ouverture de passage pour le fluide (12), et le côté frontal de l'élément (4) de renfort disposé concentriquement à l'ouverture de passage et axialement à une distance concentrant le flux magnétique, le fluide (12) étant envoyé dans au moins une zone (18) de tranquillisation ultérieure ayant un flux magnétique sensiblement plus petit.

2. Procédé suivant la revendication 1, **caractérisé en ce que** le fluide (12) entrant par l'ouverture de passage est dévié vers le côté frontal de l'élément (4) de renfort et pénètre ainsi dans le domaine (21) de flux magnétique concentré.

3. Procédé suivant la revendication 1 ou 2, **caractérisé en ce que** le fluide (12) est accéléré dans la zone (17) de traitement du côté frontal.

4. Procédé suivant la revendication 1, 2 ou 3, **caractérisé en ce que** le fluide (12) passe plus lentement dans la zone (18) de tranquillisation.

5. Procédé suivant l'une des revendications précédentes,
**caractérisé en ce que** le fluide (12) est envoyé à la sortie (20) dans une autre zone (17) de traitement ayant un domaine (21) de flux magnétique concentré.

6. Procédé suivant l'une des revendications précédentes, **caractérisé en ce que** l'on produit le flux magnétique par au moins une bobine (2) d'électro-aimant et on le règle en fonction de la nature, du débit et des conditions d'écoulement du fluide (12).

7. Procédé suivant l'une des revendications précédentes, **caractérisé en ce que** l'on alimente la bobine (2) d'électro-aimant en courant alternatif sous une tension basse allant jusqu'à environ 45 volt et à une fréquence inférieure à environ 600 Hz, de préférence comprise entre 30 et 50 Hz.

8. Procédé suivant l'une des revendications précédentes, **caractérisé en ce que** l'on envoie le fluide (12) au moins à l'entrée (19) dans un élément (15) de rebondissement.

9. Dispositif de traitement de fluide (12) calcaire comprenant un boîtier (28), une entrée (19) et une sortie (20) pour le fluide (12), le dispositif (1) de traitement de fluide ayant une chambre (3) de traitement parcouru par le fluide (12), ayant un élément (4) de renfort ferromagnétique que le fluide contourne à l'intérieur et ayant au moins une paroi (11) qui est en un matériau non-conducteur magnétiquement ou mauvais conducteur magnétiquement et qui entoure de tous côtés la chambre (3) de traitement, un ou plusieurs aimants (2) étant placés du côté extérieur sur la paroi, **caractérisé en ce que** la chambre (3) de traitement a, à l'entrée (19), une zone (17) de traitement ayant un domaine (21) de flux magnétique concentré pour le fluide (12) et au moins une zone (18) de tranquillisation venant ensuite ayant un flux magnétique sensiblement plus petit, la chambre (3) de traitement étant fermée du côté frontal par une partie (6) de boîtier ferromagnétique et exposé au flux magnétique, qui est munie d'un passage pour le fluide (12), l'élément (4) de renfort étant disposé concentriquement à l'ouverture du passage et axialement à une distance concentrant le flux magnétique.

10. Dispositif de traitement de fluide suivant la revendication 9, **caractérisé en ce qu'**il est prévu dans la chambre (3) de traitement, à la sortie (20), une autre zone (17) de traitement ayant un domaine (21) de flux magnétique concentré, qui est parcourue par le fluide (12).

11. Dispositif de traitement de fluide suivant la revendication 9 ou 10, **caractérisé en ce que** la chambre (3) de traitement a, dans la zone (18) de tranquillisation, une paroi (11) non-conductrice magnétiquement ou l'élément (4) de renfort a, dans la zone (18) de tranquillisation, un élément (27) de guidage en un matériau non-conducteur magnétiquement ou mauvais conducteur magnétiquement.

12. Dispositif de traitement de fluide suivant l'une des revendications 9 à 11, **caractérisé en ce que** le boîtier (28) et la chambre (3) de traitement à l'intérieur ont une forme oblongue, sensiblement cylindrique.

13. Dispositif de traitement de fluide suivant l'une des revendications 9 à 12, **caractérisé en ce que** l'élément (4) de renfort a une forme en barre et est disposé au centre ainsi que coaxialement dans la chambre (3) de traitement.

14. Dispositif de traitement de fluide suivant l'une des revendications 9 à 13, **caractérisé en ce que** l'élément (4) de renfort est maintenu dans la chambre (3) de traitement par des moyens (5) radiaux de fixation.

15. Dispositif de traitement de fluide suivant l'une des revendications 9 à 14, **caractérisé en ce qu'**au moins un moyen (5) de fixation est constitué sous la forme d'une plaque (15) de rebondissement ayant des ouvertures (16) de passage.

16. Dispositif de traitement de fluide suivant l'une des revendications 9 à 15, **caractérisé en ce que** le dispositif (1) de traitement de fluide a au moins une bobine (2) d'électro-aimant et une alimentation (25) en courant qui peut être réglée (26).

17. Dispositif de traitement de fluide suivant l'une des revendications 9 à 16, **caractérisé en ce que** la bobine (2) d'électro-aimant est disposée coaxialement à la chambre (3) de traitement et a l'extérieur sur la paroi (11) non-conductrice magnétiquement.

18. Dispositif de traitement de fluide suivant l'une des revendications 9 à 17, **caractérisé en ce que** l'alimentation (25) en courant fournie un courant alternatif qui peut être réglé sous une tension basse allant jusqu'a environ 45 volt et à une fréquence intérieure à environ 650 Hz, de préférence comprise entre 30 et 50 Hz.

19. Dispositif de traitement de fluide suivant l'une des revendications 9 à 18, **caractérisé en ce que** les champs alternatifs magnétiques ont des fréquences qui se modifient dans le temps.

20. Dispositif de traitement de fluide suivant l'une des revendications 9 à 19, **caractérisé en ce qu'**il est prévu, à la fois des champs alternatifs et des champs continus, qui se succèdent dans n'importe quel ordre.
